# EUROPÄISCHE PATENTSCHRIFT

(11) **EP 1 004 863 B1**
(45) Veröffentlichungstag und Bekanntmachung des Hinweises auf die Patenterteilung: **20.11.2002**
(21) Anmeldenummer: 99121523.7
(22) Anmeldetag: 29.10.1999
(51) Int. Cl.: G01K 3/08

(54) **Verfahren und Messanordnung zum Bestimmen von Veränderungen des Betriebszustandes in Glasschmelze führenden Behältern**
Method and measuring arrangement for determining changes in the operating status in glass carrying vessels
Procédé et arrangement de mesure pour déterminer les changements opératoires dans des cuves transportant du verre

(30) Priorität: 21.11.1998 DE 19853785
(43) Veröffentlichungstag der Anmeldung: 31.05.2000
(73) Patentinhaber: Beteiligungen Sorg GmbH & Co. KG, D-97816 Lohr (DE)
(72) Erfinder: Lauerbach, Sylvio Dipl.-Ing., D-97816 Lohr am Main (DE); Pieper, Helmut Dipl.-Ing., D-97816 Lohr am Main (DE)
(74) Vertreter: Zapfe, Hans, Dipl.-Ing.

(56) Entgegenhaltungen:
- EP-A- 0 352 340
- WO-A-96/20895
- US-A- 4 737 917
- US-A- 4 875 176
- US-A- 5 158 366
- PATENT ABSTRACTS OF JAPAN vol. 1995, no. 09, 31. Oktober 1995 (1995-10-31) -& JP 07 142417 A (SONY CORP), 2. Juni 1995 (1995-06-02)

## Beschreibung

Die Erfindung betrifft ein Verfahren nach dem Oberbegriff des Patentanspruchs 1 und eine Meßanordnung nach dem Oberbegriff des Patentanspruchs 14.

Glassehmelzanlagen bzw. Glasschmelzöfen, ihre Komponenten und die Veränderungen des Betriebszustandes während der Lebensdauer sind in dem Buch von Wolfgang Trier "Glasschmelzöfen - Konstruktion und Betriebsverhalten", Springer-Verlag, 1984, beschrieben. Allein das Inhaltsverzeichnis befaßt sich mit Begriffen wie Wannenbecken, Wannenböden, Feuerfest-Baustoffen, Wärmeisolierung, Materialien und deren Berechnung, Kühlung und Beheizung und insbesondere mit dem Verhalten der feuerfesten Baustoffe im Kontakt mit der Glasschmelze durch Korrosion. Das Buch befaßt sich auch mit der Benennung der Bauteile.

Es ist auch allgemein bekannt, daß man Flächenverteilungen von Temperaturen durch eine Infrarotkamera und die Bildwiedergabe optisch sichtbar machen kann, beispielsweise bei der Untersuchung der Wärmeisolation von Gebäuden, aber auch bei der kriminaltechnischen Aufspürung von Tätern, betriebswarmen Fahrzeugen etc.

Durch die US-A-5 067 977 ist es auch bekannt, die Flächenverteilung der Kühlwirkung einer Matrix von Blasdüsen beim Tempern von Automobilglasscheiben dadurch zu ermitteln, daß man den Blasdüsen eine gleichmäßig beheizte Folie vorschaltet und deren Temperaturmuster beim Anblasen durch die Kühlluftstrahlen mittels einer Infrarotkamera aufzeichnet.

Durch die US-A-4 737 917 ist es ferner bekannt, im vertikalen Strömungsquerschnitt von Vorherden durch eine Vielzahl von raster- oder gitterförmig in der Glasschmelze, d.h. mit Kontakt zum Glas, angeordneten Temperaturfühlern eine Matrix von Temperaturwerten zu bestimmen und in einer Isothermendarstellung anzuzeigen. Dabei werden auch fehlende Temperaturwerte durch eine Lagrange-Interpolation in einem Rechner errechnet und auf einem Bildschirm dargestellt und können mit einer Farbtabelle verglichen werden. Diese Meßmethode sagt jedoch nur etwas über die Temperaturverteilung in der Glasschmelze und über die Verarbeitungseigenschaften des Glases aus, aber nichts über den Betriebsund Verschleißzustand der Baustoffe des Vorherdes und auch nichts über deren Veränderungen.

Die Lebensdauer eines Glasschmelze führenden Behälters ist von einer Vielzahl von Faktoren abhängig und wird hauptsächlich durch den thermischen und mechanischen Verschleiß des Feuerfestmaterials begrenzt. Einige Faktoren haben einen besonders großen Einfluß auf den Verschleiß des Feuerfestmaterials:
* die thermisches Beanspruchung,
* die mechanische Belastung (Tonnen/Tag; Tonnen/m²),
* der chemische Angriff (aggressive Glasarten und Ofenatmosphären),
* die qualitativen Eigenschaften des Feuerfestmaterials.

Durch einen betriebsbedingten oder örtlich voreilenden Verschleiß kann flüssiges Glas in das Feuerfestmaterial eindringen und den Feuerfest--Aufbau so stark schädigen, daß es zu einem Durchbruch von Glas kommt und damit eine akute Gefährdung des Personals und der Anlage besteht.

Die Probleme haben sich in letzter Zeit durch die Verbesserung der Wärmeisotation zur Verbesserung des thermischen Wirkungsgrades noch verschärft. Auch wurde dadurch die Möglichkeit einer visuellen Beobachtung der hoch beanspruchten Materialien erschwert.

Aus Sicherheitsgründen ist die Verschleißkontrolle des in Kontakt mit der Glasschmelze stehenden Feuerfestmaterials von Vorwärmern, Wannenböden (Bassins), Seitenwänden, Durchlässen, Läuter- und Abstehteilen, Speisern und Speiserköpfen von Glasschmelzanlagen von entscheidender Bedeutung. Die bekannten visuellen Kontrollen durch das Bedienungspersonal und zusätzliche Thermoelemente oder Probebohrungen gegen Ende der Wannenreise genügen den gestiegenen Anforderungen nicht mehr. Auch die Bewertung der bisher gemessenen Werte hat sich als nicht ausreichend erwiesen.

Der Einsatz von Infrarotkameras genügt hierbei nicht, insbesondere dann nicht, wenn die Glasschmelze für Infrarotstrahlung nicht durchlässig ist.

Die US-A-4 737 917 befaßt sich damit, Momentaufnahmen der Temperatur-Meßwerte von 2- oder 3-dimensional matrixförmig angeordneten Temperaturfühlern in strömenden Glasschmelzen anzufertigen, und zwar sowohl quer zur Strömungsrichtung als auch in waagrechten und senkrechten Ebenen in Strömungsrichtung und auch unter Zuordnung zu den Raumkoordinaten der jeweiligen Matrixelemente. Es geht jedoch darum, innerhalb eines Produktionszyklus die Temperaturprofile durch Beeinflussung von Heiz- und Kühlleistung möglichst konstant zu halten, um reproduzierbare Produktionsbedingungen aufrecht zu erhalten. Die zeitlich wiederholte Speicherung solcher sich ändernder Temperaturprofile und ihrer Raumkoodinaten ist jedoch nicht vorgesehen, desgleichen nicht das "Blättern" in historischen Aufzeichnungen, um z.B. unterschiedliche lokale und zeitliche Trends von fortschreitenden Erosionen zu überwachen und in zeitraffender Darstellung anzeigen zu können. Der Rückblick auf historische Vorgänge wäre auch sinnlos, da diese keine Trends im Hinblick auf fortschreitenden Verschleiß erkennen lassen. Die Schrift ist mithin gattungsfremd.

Durch die DD 240 538 A1 und die WO 96/20895 ist es weiterhin bekannt, in feuerfesten Laminaten von Baustoffen von Glassschmelzöfen an wenigen Stellen in der Tiefe gestaffelt und paarweise Temperaturfühler anzuordnen und deren Meßsignale in einer Logik zu verarbeiten, um die lokale Kühlleistung temperatur- und verschleißabhängig zu regeln. Die zeitlich wiederholte Speicherung solcher sich ändernder Temperaturgradienten und ihrer Raumkoodinaten ist jedoch nicht vorgesehen, desgleichen nicht das "Blättern" in historischen Aufzeichnungen, um z.B. unterschiedliche lokale und zeitliche Trends von fortschreitenden Erosionen zu überwachen und in zeitraffender Darstellung anzeigen zu können.

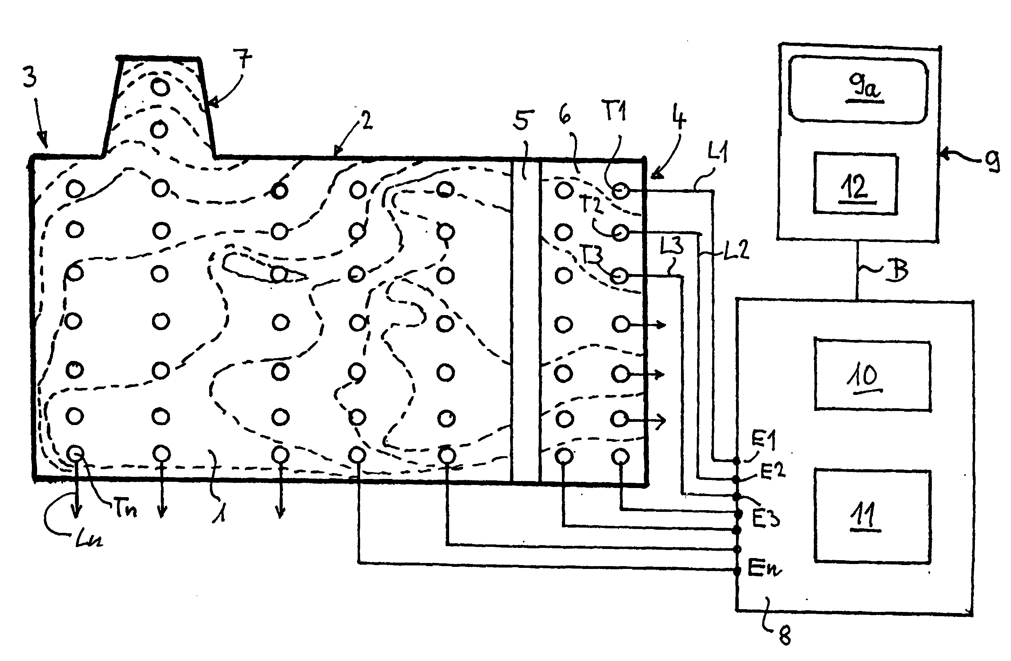

Durch die US-A-5 158 366 ist es auch bekannt, in 2-dimensionaler räumlicher Verteilung an den kritischen Stellen von Schmelzöfen, darunter auch von Glasschmelzöfen, in den Feuerfestmaterialien eine Mehrzahl von Temperaturfühlern anzuordnen, um bei einem örtlichen Verschleiß über eine Recheneinrichtung nacheinander Warnsignale für eine kritische Restwandstärke oder (nach einem Schmelzendurchbruch) Alarmsignale zu erhalten. Hierbei werden auch die Raumkoordinaten der Temperaturfühler angezeigt. Die unterschiedlichen örtlichen Meßbereiche sind jedoch im aligemeinen schon wegen des Meßprinzips der Widerstandsmessung leitfähiger Keramiken auf den Raum zwischen Platten oder Netzen (Figuren 1, 8 bis 10) oder in geschlossenen Hülsen beschränkt. Die zeitlich wiederholte Speicherung solcher sich ändernder Temperaturgradienten und ihrer Raumkoodinaten ist jedoch nicht vorgesehen, desgleichen nicht das "Blättern" in historischen Aufzeichnungen, um z.B. unterschiedliche lokale und zeitliche Trends von fortschreitenden Erosionen zu überwachen und in zeitraffender Darstellung anzeigen zu können.

Auch durch die DE 40 39 601 A1 ist es nur bekannt, an kritischen Stellen einer Wannenwand in dieser Temperaturfühler anzuordnen, um den Nachrüstzeitpunkt für die Reparatur der Schmelzwanne durch Nachrüstelemente zu bestimmen.

Bei allen bekannten Lösungen fehlt die konsekutive Aufzeichnung einer Vielzahl von Temperaturprofilen und "Temperaturlandkarten" unter Zuordnung von Meß- und Speicherzeitpunkten, um auch rückwirkend die zeitlichen Abläufe der Vorgänge an den einzelnen Matrixpunkten aufrufen und ggf, in zeitraffender Darstellung wie einen Film ablaufen zu lassen. Es fehlen auch Hinweise auf den Ausdruck von Folgen solcher Speicherungen.

Mit Ausnahme der US-A-4 737 917, die andere Meßziele innerhalb der Schmelze und nicht im Feuerfestmaterial verfolgt, enthält auch keine der Schriften einen Hinweis auf eine Matrix- oder Gitteranordnung von Temperaturfühlern, die allein eine ausreichende Flächendichte von Meßwerten erzeugen könnte.

Der Erfindung liegt demgegenüber die Aufgabe zugrunde, ein Verfahren und eine Meßanordnung anzugeben, durch die eine frühzeitige Erkennung des Trends fortschreitenden flächenmäßigen Verschleißes der Feuerfestmaterialien unter wiederholtem oder wiederholbarem Vergleich mit gespeicherten historischen Daten zeitraffend, statistisch und optisch innerhalb verschienener Betriebszeiträume darstellbar ist, um auch den zeitabhängigen Grad der Veränderungen des Betriebszustandes zu bestimmen.

Es handelt sich insbesondere um eine frühzeitige Erkennung des Trends des fortschreitenden Verschleißes der Feuerfestmaterialien, insbesondere von Vorwärmern, Wannenböden (Bassins), Seitenwänden, Durchlässen, Läuter- und Abstehteilen, Speisern und Speiserköpfen von Glasschmelzanlagen und eine genaue Lokalisierung des Verschleißes.

Die Lösung der gestellten Aufgabe erfolgt bei dem eingangs beschriebenen Verfahren erfindungsgemäß durch die Merkmale im Kennzeichen des Patentanspruchs 1.

Die Matrix muß dabei keine gleichmäßige sein; auch genügt eine Anordnung innerhalb der Feuerfestmaterialien und/oder in der Wärmeisolierung - je nach der gewünschten Genauigkeit - in einem Rastermaß von 400 bis 800 mm. Auch eine Konzentration der Temperatur-Meßsonden in besonders kritischen Bereich ist denkbar. Dabei wird empfohlen, zumindest im zu erwartenden Verschleißbereich den Abstand der Temperatur-Meßsonden von der glasseitigen Oberfläche nicht größer als die kritische Materialstärke, z.B. die Bodenstärke, zu wählen.

Durch die Erfindung ist es möglich, die gewonnenen Temperaturdaten für den Anwender statistisch und grafisch aufzubereiten. über statistische Verfahren der Differenz- oder Mittelwertbildung können verschiedene Zustände innerhalb verschiedener Betriebszeiträume miteinander verglichen werden, z.B. das 10. Quartal mit dem 11. Quartal, das 4. Betriebsjahr mit dem 5. Betriebsjahr, etc. Dadurch ist es möglich, einen Trend in der Änderung des Temperaturprofils bzw. der Temperatur-Landschaft und eine Änderung der Topographie der Begrenzungsflächen, die sich von einer Ebene erheblich unterscheiden kann, zuverlässig zu erkennen. Auch ein Ausfall einer Meßsonde läßt sich auf diese Weise erkennen. Langsame Zustandsänderungen können von schnellen Zustandsänderungen zuverlässig unterschieden werden. Eine örtlich verringerte Restwandstärke kündigt sich frühzeitig an, so daß Maßnahmen ergriffen werden können, die die Wannenreise verlängern wie die Anbringung von zusätzlichen Kühlungselementen, Plattierungen etc.

Durch den Zeitraffer-Effekt können zeitlich und örtlich schwankende Temperaturen von stationären Temperaturen deutlich unterschieden werden. So ist es möglich, einen bestimmten Zeitraum, beispielsweise ein Jahr, innerhalb einer Minute dynamisch darzustellen und die extrem langsam ablaufenden zeitlichen und räumlichen Veränderungen der Temperaturwerte zu erkennen und von statischen Werten zu unterscheiden.

Hierdurch entsteht - nach Maßgabe der Aufzeichnungsfrequenz bzw. der Aufzeichnungsabstände, die Tage, Wochen, Monate oder Jahre betragen können - eine Folge von Momentaufnahmen visueller "Wärmelandschaften", die in einer kurzen zeitlichen Abfolge betrachtet werden können, wodurch Unterschiede und deren Trends deutlich sichtbar werden. Dadurch ist es möglich, eine frühzeitige Erkennung des Trends des fortschreitenden Verschleißes der Feuerfestmaterialien der oben genannten Anlagenbauteile und eine genaue Lokalisierung durchzuführen, so daß ggf. noch eine Abhilfe möglich ist.

Bei einer genügenden Anzahl von "Momentaufnahmen" im gleichen Maßstab lassen sich diese mit Bildfrequenzen von z.B. 25 Hz wie ein Film abspielen, wodurch Zonen mit starken Veränderungen pro Zeiteinheit durch ihre größere Bewegungsgeschwindigkeit besonders gut zu erkennen sind.

Als Speichermedien für die "Momentaufnahmen" lassen sich auch bewegliche Datenspeicher, z.B. in Form von Videokassetten, CD-Rom's und DVD's verwenden, und auch eine Fernübertragung der gespeicherten Daten über Kontinente ist möglich, so daß der Ofenhersteller zuverlässige Ferndiagnosen erstellen und unverzüglich Ratschläge zu Problemlösungen abgeben kann, ohne daß sofort hohe Reisekosten durch die Entsendung von Fachpersonal entstehen.

Die Datenspeicherung läßt sich auch sehr gut zur Beweissicherung verwenden: Hinsichtlich eventueller Garantien und Gewährleistungen lassen sich Bedienungsfehler sehr gut von Systemfehlern unterscheiden. Auch ist es möglich, beim frühzeitigen Erkennen von Systemfehlern Abhilfemaßnahmen bereits in die Neuentwicklung von Glasschmelzöfen einfließen zu lassen. Ein schnellerer Eingriff in die Entwicklung und/oder Verbesserung von bestehenden Glasschmelzöfen ist kaum noch denkbar.

Durch die zusätzliche Anordnung direkter oder indirekter Temperatur-Meßsonden innerhalb der Glasschmelze, d.h. mit Abstand vor der glasseitigen Oberfläche können deren Meßwerte in Relation gesetzt werden zu den Temperaturwerten der Temperatur-Meßsonden T1, T2, T3 bis Tn auf der anderen Seite der glasseitigen Oberfläche, so daß aus den Differenzen benachbarter Messungen auch die Restwandstärke in dem betreffenden Bereich ermittelt werden kann.

Die erfindungsgemäße Erfassung und Speicherung von Serien von Temperaturmustern bzw. "Temperaturlandkarten" im gleichen Maßstab schafft aber noch eine weitere Kontrollmöglichkkeit des Betriebszustandes mit relativ kürzeren Zeitabläufen: So können z.B. unterschiedliche Temperaturverteilungen, hervorgerufen durch geänderte Betriebsbedingungen (z.B. wechselnde Gemengeverteilung auf der Glasbadoberfläche, wechselnde Strahlungseigenschaften der Brennerflammen und/oder wechselnde elektrische Heizleistung der Elektroden) erfaßt und mit früheren und späteren Messungen verglichen werden, um Fehlinterpretationen zu vermeiden. Ferner können unterschiedliche Temperaturen und/oder Temperaturverteilungen in einzelnen Begrenzungsflächen der Wandungen oder Böden durch zu starke oder zu schwache Kühlung der Wandungen oder Böden bestimmt und berücksichtigt werden. Dies soll anhand eines Beispiels näher erläutert werden: Eine stärkere Kühlung, z.B. durch falsche Einstellung von Luftklappen, äußert sich in einer Temperaturabsenkung der betroffenen Begrenzungsfläche, was auf eine scheinbare Vergrößerung der Restwandstärke schließen ließe. Dies aber ist ausgeschlossen, und ein Vergleich mit zeitlich früheren Messungen läßt eine lokale Störung des vorgegebenen Temperaturhaushalts erkennen und beseitigen.

Es ist dabei besonders vorteilhaft, wenn man - entweder einzeln oder in Kombination- :
* die oder jede Matrix der besagten Temperatur-Meßsonden in gleichbleibenden Abständen von den glasseitigen Oberflächen der Baustoffe anordnet,
* mindestens zwel Matrizes in unterschiedlichen Abständen von den glasseitigen Oberflächen der Baustoffe anordnet (Erkennung von Temperaturgradienten und Wärmedurchgangszahlen),
* die mindestens eine Matrix von Temperatur-Meßsonden im Behälterboden, insbesondere im Wannenboden anordnet,
* zusätzliche Temperaturwerte innerhalb und außerhalb der oder jeder Matrix durch Interpolation und/oder Extrapolation berechnet und unter Zuordnung zu ihren fiktiven Flächenverteilungskoordinaten abspeichert,
* die Temperaturverteilung durch differenzierte Farbfelder darstelit und/oder, wenn man
* die Temperaturverteilung durch linienförmige Isothermen darstellt.

Die Lösung der gestellten Aufgabe erfolgt bei der eingangs angegebenen Meßanordnung erfindungsgemäß durch die Merkmale im Kennzeichen der Patentanspruchs 14.

Es ist dabei besonders vorteilhaft, wenn - entweder einzeln oder in Kombination - :
* die oder jede Matrix in gleichbleibenden Abständen von den glasseitigen Oberflächen der Baustoffe angeordnet ist,
* mindestens zwei Matrizes in unterschiedlichen Abständen von den glasseitigen Oberflächen der Baustoffe angeordnet sind,
* die mindestens eine Matrix von Temperatur-Meßsonden im Behälterboden bzw. im Wannenboden angeordnet ist und/oder, wenn
* der Rechner für eine Bestimmung zusätzlicher Temperaturwerte innerhalb und außerhalb der oder jeder Matrix durch Interpolation und/oder Extrapolation ausgelegt ist und wenn der Speicher Speicherplätze für diese zusätzlichen Temperaturwerte und für ihre fiktiven Flächenkoordinaten besitzt.

Ein Ausführungsbeispiel des Erfindungsgegenstandes und seine Wirkungsweise werden nachstehend anhand der einzigen Figur näher erläutert, die - in sehr schematischer Darstellungsweise - eine Draufsicht auf eine Glasschmelzwanne und die zugehörige Datenverarbeitungseinrichtung zeigt.

Die Glasschmelzwanne 1 ist durch eine dicke Umrißlinie 2 hervorgehoben und besitzt ein Beschickungsende 3 und ein Entnahmeende 4, zwischen denen eine Läuterbank 5 in Form eines vom Wannenboden (Behälterboden) aufragenden Wehrs ebenso nur angedeutet ist wie ein "Deep Refiner" 6. Die Beschickkung geschieht über ein sogenanntes "Dog House" 7. Die Heizquellen, Brenner und/oder Elektroden, sind der Einfachheit halber nicht dargestellt.

Unterhalb der glasseitigen Oberfläche des Wannenbodens (Behälterbodens) befindet sich eine Matrix von 7 mal 7 Temperatur-Meßsonden T1, T2, T3 bis Tn, die durch Kreise angedeutet sind. Von den Temperatur-Meßsonden führen Leitungen L1, L2, L3 bis Ln zu den Eingängen E1, E2, E3 bis En einer Meßwert-Erfassungseinrichtung 8, die vor Ort angeordnet ist. Diese Meßwert-Erfassungseinrichtung 8 besitzt eine zentrale Steuereinheit 10 mit einer Zeitschaltung und einem Speicher 11 mit einer ganzen Reihe von Speicherplätzen, die nicht besonders dargestellt sind. Der Speicher 11 dient zur Abspeicherung aller Temperatur-Meßwerte mit den zugehörigen Raumkoordinaten der Temperatur-Meßsonden T1, T2, T3 bis Tn zu einem Zeitpunkt to, weitere Speicherplätze dienen zur Abspeicherung analoger Werte zu späteren Zeitpunkten t1, t2, t3 bis tn, die Tage, Wochen, Monate oder Jahre auseinander liegen können. Durch ein Bussystem B werden die Daten an einen Rechner 9 weitergegeben, der einen Monitor 9a und einen Speicher 12 mit zahlreichen Speicherplätzen besitzt, die gleichfalls nicht einzeln dargestellt sind.

Durch die Temperatur-Meßsonden T1, T2, T3 bis Tn wird ein Temperaturfeld erfaßt, das auf dem Monitor 9a dargestellt wird und dessen Isothermen gestrichelt dargestellt sind. Die einzelnen Bereiche lassen sich auch durch die Meßwert-Erfassungseinrichtung 8 in unterschiedlichen Farben darstellen. In den Bereichen mit enger Nachbarschaft der Isothermen liegen steile Temperaturgradienten vor, die auf eine starke örtliche Wärmebelastung und/oder auf einen starken Verschleiß des Feuerfestmaterials des Wannenbodens schließen lassen. Wenn man nun in zeitraffender Weise nacheinander mehrere, mindestens zwei, solcher Isothermen-Darstellungen anzeigt, so wird sofort augenscheinlich, welche Veränderungen an welchem Ort stattgefunden haben und wie weit der Verschleiß bereits fortgeschritten ist.

### Bezugszeichenliste:

- 1: Glasschmelzwanne
- 2: Umrißlinie
- 3: Beschickungsende
- 4: Entnahmeende
- 5: Läuterbank
- 6: "Deep Refiner"
- 7: "Dog House"
- 8: Meßwert-Erfassungseinrichtung
- 9: Rechner
- 9a: Monitor
- 10: zentrale Steuereinheit
- 11: Speicher
- 12: Speicher

- T1, T2, T3 bis Tn: Temperatur-Meßsonden
- L1, L2, L3 bis Ln: Leitungen
- E1, E2, E3 bis En: Eingänge
- to, t1, t2, t3 bis tn: Zeitpunkte.

## Patentansprüche

1. Verfahren zum Bestimmen von Veränderungen des Betriebszustandes an Begrenzungsflächen von Schmelze führenden Behältern von Glasschmelzanlagen durch örtliche Erfassung von Temperaturgradienten mittels innerhalb der Behälter-Baustoffe aus der Gruppe Feuerfestmaterialien und Wärmeisolierung und mit Abstand von der glasseitigen Oberfläche der Feuerfestmaterialien und/oder innerhalb der Wärmeisolierung angeordneter Temperatur-Meßsonden, wobei die Meßwerte unter Zuordnung zu ihren Raumkoordinaten angezeigt werden, wobei man mindestens eine Matrix der genannten Temperatur-Meßsonden (T1, T2, T3, .... Tn) anordnet, eine Folge von Daten mehrerer Messungen zu verschiedenen Zeitpunkten nacheinander in einem Rechner (9) abspeichert und die einzelnen Temperatur-Meßwerte und die zugehörigen Raumkoordinaten der Messungen nacheinander aus dem Rechner (9) abruft und die den verschiedenen Zeitpunkten entsprechenden Daten miteinander vergleicht und aus der genannten Folge von gemessenen Temperatur-Werten in zeitraffenden optischen Darstellungen die zeitlichen und örtlichen Veränderungen des Betriebszustandes bestimmt.

2. Verfahren nach Anspruch 1, **dadurch gekennzeichnet, dass** man die oder jede Matrix von Temperatur-Meßsonden (T1, T2, T3, .... Tn) in gleichbleibenden Abständen von den glasseitigen Oberflächen der Behälter-Baustoffe anordnet.

3. Verfahren nach Anspruch 1, **dadurch gekennzeichnet, dass** man mindestens zwei Matrizes von Temperatur-Meßsonden (T1, T2, T3, .... Tn) in unterschiedlichen Abständen von den glasseitigen Oberflächen der Behälter-Baustoffe anordnet.

4. Verfahren nach Anspruch 1, **dadurch gekennzeichnet, dass** man die mindestens eine Matrix von Temperatur-Meßsonden (T1, T2, T3, .... Tn) im Behälterboden anordnet.

5. Verfahren nach Anspruch 1, **dadurch gekennzeichnet, dass** man zusätzliche Temperaturwerte innerhalb und außerhalb der oder jeder Matrix von Temperatur-Meßsonden (T1, T2, T3, .... Tn) durch interpolation und/oder Extrapolation berechnet und unter Zuordnung zu ihren fiktiven Flächenverteilungskoordinaten abspeichert.

6. Verfahren nach Anspruch 1, **dadurch gekennzeichnet, dass** man die Temperaturverteilung durch differenzierte Farbfelder darstellt.

7. Verfahren nach Anspruch 1, **dadurch gekennzeichnet, dass** man die Temperaturverteilung durch linienförmige Isothermen darstellt.

8. Verfahren nach Anspruch 1, **dadurch gekennzeichnet, dass** man die Daten für die Temperaturen und die Raumkoordinaten der Temperatur-Meßsonden (T1, T2, T3, .... Tn) und eventuelle Interpolationswerte dieser Daten auf einem Datenträger abspeichert.

9. Verfahren nach Anspruch 1, **dadurch gekennzeichnet, dass** man die Daten "on-line" überträgt.

10. Verfahren nach Anspruch 1, **dadurch gekennzeichnet, dass** man die Folge von Daten mehrerer Messungen mit den zugehörigen Raumkoordinaten abspeichert und mit einer für Bildschirmgeräte (8) üblichen Bildfrequenz auf einem Monitor (9a) darstellt.

11. Verfahren nach Anspruch 10, **dadurch gekennzeichnet, dass** man die Bildfolge "on-line" überträgt.

12. Verfahren nach Anspruch 1, **dadurch gekennzeichnet, dass** man die Folge von Daten mehrerer Messungen mit den zugehörigen Raumkoordinaten über einen Drucker ausdruckt.

13. Verfahren nach Anspruch 1, **dadurch gekennzeichnet, dass** man eine Gruppe zusätzlicher Temperatur-Meßsonden innerhalb der Glasschmelze mit gleichen Abständen von den außerhalb der Glasschmelze angeordneten Temperatur-Meßsonden (T1, T2, T3, ... T4) der Matrix anbringt und aus dem laufenden Vergleich der Temperatur-Meßwerte benachbarter Temperatur-Meßsonden die jeweilige Restwandstärke bestimmt.

14. Meßanordnung zum Bestimmen von Veränderungen des Betriebszustandes von Begrenzungsflächen von Schmelze führenden Behältern von Glasschmelzanlagen durch örtliche Erfassung von Temperaturgradienten, wobei innerhalb der Behälter-Baustoffe aus der Gruppe Feuerfestmaterialien und Wärmeisolierung und mit Abstand von der glasseitigen Oberfläche der Feuerfestmaterialien und/oder innerhalb von Isolierstoffen mehrere Temperatur-Meßsonden angeordnet sind, wobei mindestens eine Matrix der genannten Temperatur-Meßsonden (T1, T2, T3, .... Tn) vorhanden ist und wobei eine Meßwert-Erfassungseinrichtung (8) und ein Rechner (9) mit jeweils mindestens einem Speicher (11, 12) und einer Zeitschaltung für
a) die Abspeicherung der einzelnen Temperatur-Meßwerte unter Zuordnung zu den Raumkoordinaten der genannten Temperatur-Meßsonden (T1, T2, T3, .... Tn) und für
b) die Abspeicherung einer Folge von weiteren Temperatur-Meßwerten der genannten Temperatur-Meßsonden (T1, T2, T3, .... Tn) zu verschiedenen Zeitpunkten nach Maßgabe der Zeitschaltung vorgesehen ist, und wobei
eine Wiederholungsschaltung vorgesehen ist, durch die die zeitlichen Veränderungen der Temperatur-Meßwerte abrufbar sind und dass die örtlichen Veränderungen des Betriebszustandes durch Vergleich der zu verschiedenen Zeitpunkten aufgenommen Temperaturmesswerte in zeitraffenden optischen Darstellungen ermittelbar sind.

15. Meßanordnung nach Anspruch 14, **dadurch gekennzeichnet, dass** die Temperatur-Meßwerte als Isothermen auf einem Bildschirm darstellbar sind.

16. Meßanordnung nach Anspruch 14, **dadurch gekennzeichnet, dass** die Temperatur-Meßwerte als Isothermen durch einen Drucker ausdruckbar sind.

17. Meßanordnung nach Anspruch 14, **dadurch gekennzeichnet, dass** die oder jede Matrix von Temperatur-Meßsonden (T1, T2, T3, .... Tn) in gleichbleibenden Abständen von den glasseitigen Oberflächen der Behälter-Baustoffe angeordnet ist.

18. Meßanordnung nach Anspruch 14, **dadurch gekennzeichnet, dass** mindestens zwei Matrizes von Temperatur-Meßsonden (T1, T2, T3, .... Tn) in unterschiedlichen Abständen von den glasseitigen Oberflächen der Behälter-Baustoffe angeordnet sind.

19. Meßanordnung nach Anspruch 14, **dadurch gekennzeichnet, dass** die mindestens eine Matrix von Temperatur-Meßsonden (T1, T2, T3, .... Tn) jenseits mindestens einer Begrenzungsfläche aus der Gruppe Vorwärmer, Wannenboden, Seitenwand, Durchlässen, Läuter- und Abstehteilen, Speiser und Speiserköpfe angeordnet ist.

20. Meßanordnung nach Anspruch 14, **dadurch gekennzeichnet, dass** der Rechner (9) für eine Bestimmung zusätzlicher Temperaturwerte innerhalb und außerhalb der oder jeder Matrix durch Interpolation und/oder Extrapolation ausgelegt ist und dass der mindestens eine Speicher (11, 12) Speicherplätze für diese zusätzlichen Temperaturwerte und für ihre fiktiven Flächenkoordinaten besitzt.

## Claims

1. Method for determining changes in the operating state at defining surfaces of melt containing vessels of glass melting plants by local detection of temperature gradients by means of temperature measuring probes arranged within the vessel structure materials of the group refractory materials and heat insulation and at a distance from the glass side surfaces of the refractory materials and/or within the heat insulation, and the measuring values are displayed whilst associated to the space coordinates, and at least one matrix of the aforementioned temperature measuring probes (T1, T2, T3, .... Tn) is arranged, a succession of data of a plurality of measurings at different points in time is one after the other stored in a computer (9), and the individual temperature measuring values and the associated space coordinates of the measurings are recalled one after the other from the computer (9), and the data which correspond with different points in time are compared with each other, and temporal and local changes of the operating state are determined in time-lapse optical illustrations from the aforementioned succession of measured temperature values.

2. Method according to Claim 1, **characterised in that** the or each matrix of temperature measuring probes (T1, T2, T3, .... Tn) is arranged equidistantly from the glass side surfaces of the container structure materials.

3. Method according to Claim 1, **characterised in that** at least two matrices of temperature measuring probes (T1, T2, T3, .... Tn) are arranged at different distances from the glass side surfaces or the vessel structure material.

4. Method according to Claim 1, **characterised in that** the at least one matrix of temperature measuring probes (T1, T2, T3, .... Tn) is arranged in the bottom of the vessel.

5. Method according to Claim 1, **characterised in that** additional temperature values inside and outside the/each matrix of temperature measuring probes (T1, T2, T3, .... Tn) is/are calculated by interpolation and/or extrapolation and stored with association to their fictitious surface distribution coordinates.

6. Method according to Claim 1, **characterised in that** the temperature distribution is displayed by way of different colour fields.

7. Method according to Claim 1, **characterised in that** the temperature distribution is displayed by lineshaped isotherms.

8. Method according to Claim 1, **characterised in that** the data for the temperatures and the space coordinates of the temperature measuring probes (T1, T2, T3, .... Tn) and possible interpolation values of these data are stored in a data carrier.

9. Method according to Claim 1, **characterised in that** the data are transferred "online".

10. Method according to Claim 1, **characterised in that** the succession of data of a plurality of measurings is stored with associated space coordinates and displayed on a monitor (9a) at an image frequency which is conventional for display monitors (8).

11. Method according to Claim 10, **characterised in that** the image sequence is transferred "online".

12. Method according to Claim 1, **characterised in that** the succession of data of a plurality of measurings is printed with the associated space coordinates by a printer.

13. Method according to Claim 1, **characterised in that** a group of additional temperature measuring probes is placed within the glass melt equidistantly from temperature measuring probes (T1, T2, T3, .... Tn) of the matrix arranged outside the glass melt, and the respective residual wall thickness is determined from continuous comparison of the temperature measuring values of adjacent temperature measuring probes.

14. Measuring arrangement for determining changes in the operating state of defining surfaces of melt carrying vessels of glass melting plants by local detection of temperature gradients, and within the vessel structure materials of the group refractory materials and heat insulation is arranged a plurality of temperature measuring probes at a distance from the glass side surface of the refractory materials and/or within insulating materials, and at least one matrix of the aforementioned temperature measuring probes (T1, T2, T3, .... Tn) is present and provision is made for a measuring value detection device (8) and a computer (9) with at least one respective memory (11, 12) and a timing circuit for
a) storing the individual temperature measuring values with association to space coordinates of the aforementioned temperature measuring probes (T1, T2, T3, .... Tn) and for
b) storing a succession of additional temperature measuring values of the aforementioned temperature measuring probes (T1, T2, T3, .... Tn) at different points in time according to the timing circuit, and a
repeater circuit is provided so that temporal changes of temperature measuring values can be called up and local changes of the operating state can be determined by way of comparing temperature measuring values recorded at different points in time as shown in time-lapse optical displays.

15. Measuring arrangement according to Claim 14, **characterised in that** the temperature measuring values are displayed on a monitor as isotherms.

16. Measuring arrangement according to Claim 14, **characterised in that** the temperature measuring values are printable as isotherms by a printer.

17. Measuring arrangement according to Claim 14, **characterised in that** the or each matrix of temperature measuring probes (T1, T2, T3, .... Tn) is arranged equidistantly from the glass side surfaces of the vessel structure materials.

18. Measuring arrangement according to Claim 14, **characterised in that** at least two matrices of temperature measuring probes (T1, T2, T3, .... Tn) are arranged at different distances from the glass side surfaces of the vessel structure materials.

19. Measuring arrangement according to Claim 14, **characterised in that** the at least one matrix of temperature measuring probes (T1, T2, T3, .... Tn) is arranged on the other side of at least one defining surface of the group of preheater, trough bottom, sidewall, passages, refining and projecting parts, feeders and feeder heads.

20. Measuring arrangement according to Claim 14, **characterised in that** the computer (9) is designed for determining additional temperature values inside and outside the/each matrix by interpolation and/or extrapolation, and the at least one memory (11, 12) has memory spaces for these additional temperature values and for their fictitious surface coordinates.

## Revendications

1. Procédé pour déterminer des variations de l'état de fonctionnement au niveau de surfaces limites de récipients, guidant une masse fondue, d'installations de fusion du verre, moyennant la détection locale de gradients de température au moyen de sondes de mesure de température, qui sont disposées à l'intérieur des matériaux de construction du récipient tirés du groupe de matériaux réfractaires et d'un isolant thermique et disposées à distance de la surface, côté verre, des matériaux réfractaires et/ou à l'intérieur de l'isolant thermique, selon lequel les valeurs de mesure sont affichées en association avec leurs coordonnées spatiales, et selon lequel on dispose une matrice desdites sondes de mesure de température (T1, T2, T3, ... Tn), on mémorise successivement une suite de données de plusieurs mesures à différents instants dans un calculateur (9) et on interroge successivement les différentes valeurs de mesure de température et les coordonnées spatiales associées à ces mesures à partir du calculateur (9) et on compare entre elles les données correspondant aux différents instants et on détermine à partir de ladite suite de valeurs mesurées de température, dans des représentations optiques accélérées, les variations dans le temps et les variations locales de l'état de fonctionnement.

2. Procédé selon la revendication 1, **caractérisé en ce qu'**on dispose la ou chaque matrice de sondes de mesure de température (T1, T2, T3, ... Tn) à des distances identiques des surfaces, côté verre, des matériaux de construction des récipients.

3. Procédé selon la revendication 1, **caractérisé en ce qu'**on dispose au moins deux matrices de sondes de mesure de température (T1, T2, T3, ... Tn) à des intervalles différents des surfaces, côté verre, des matériaux de construction des récipients.

4. Procédé selon la revendication 1, **caractérisé en ce qu'**on dispose au moins une matrice de sondes de mesure de température (T1, T2, T3, ... Tn) dans le fond des récipients.

5. Procédé selon la revendication 1, **caractérisé en ce qu'**on calcule par interpolation et/ou extrapolation, des valeurs supplémentaires de température à l'intérieur et à l'extérieur de la ou de chaque matrice de sondes de mesure de température (T1, T2, T3, ... Tn) et on les mémorise en association avec leurs coordonnées fictives de distribution de surface.

6. Procédé selon la revendication 1, **caractérisé en ce qu'**on représente la distribution de température au moyen de zones colorées différenciées.

7. Procédé selon la revendication 1, **caractérisé en ce qu'**on représente la distribution de température par des isothermes sous la forme de lignes.

8. Procédé selon la revendication 1, **caractérisé en ce qu'**on mémorise les données pour les températures et les coordonnées spatiales des sondes de mesure de température (T1, T2, T3, ... Tn) et d'éventuelles valeurs d'interpolation de ces données sur un support de données.

9. Procédé selon la revendication 1, **caractérisé en ce qu'**on transmet les données "en ligne".

10. Procédé selon la revendication 1, **caractérisé en ce qu'**on mémorise la suite de données de plusieurs mesures avec les coordonnées spatiales associées et qu'on les représente sur un moniteur (9a) avec une fréquence d'images usuelle pour des appareils à écran (8).

11. Procédé selon la revendication 10, **caractérisé en ce qu'**on transmet la suite d'images "en ligne".

12. Procédé selon la revendication 11, **caractérisé en ce qu'**on réalise une sortie imprimée de la suite de données de plusieurs mesures avec les coordonnées spatiales associées, au moyen d'une imprimante.

13. Procédé selon la revendication 1, **caractérisé en ce qu'**on place un groupe de sondes supplémentaires de mesure de température à l'intérieur de la masse fondue de verre à des distances identiques des sondes de mesure de température (T1, T2, T3, ... Tn) de la matrice disposées à l'extérieur de la masse fondue de verre, et qu'on détermine l'épaisseur de paroi résiduelle respective au moyen d'une comparaison permanente des valeurs de mesure de température de sondes de mesure de température voisines.

14. Dispositif de mesure pour la détermination de surfaces limites de récipients guidant une masse fondue, d'installation de fusion du verre par détection locale de gradients de température, et dans lequel plusieurs sondes de mesure de température sont disposées à l'intérieur des matériaux de construction des récipients, qui font partie du groupe des matériaux réfractaires et d'un isolant thermique et à distance de la surface, côté verre, des matériaux réfractaires et/ou à l'intérieur de matériaux isolants, et dans lequel au moins une matrice desdites sondes de mesure de température (T1, T2, T3, ... Tn) est présente, et dans lequel sont prévus un dispositif (8) de détection des valeurs de mesure et un calculateur (9) comportant respectivement au moins une mémoire (11, 12) et une minuterie pour
a) la mémorisation des différentes valeurs de mesure de température en association avec les coordonnées spatiales desdites sondes de mesure de température (T1, T2, T3, ... Tn), et pour
b) la mémorisation d'une suite d'autres valeurs de mesure de température desdites sondes de mesure de température (T1, T2, T3, ... Tn) à différents instants en fonction de la minuterie, et
dans lequel il est prévu un circuit de répétition, à l'aide duquel les différentes variations des valeurs de mesure de température peuvent être appelées, et es variations locales de l'état de fonctionnement peuvent être déterminées par comparaison des valeurs de mesure de température, enregistrées à différents instants, selon des représentations optiques accélérées.

15. Dispositif de mesure selon la revendication 14, **caractérisé en ce que** les valeurs de mesure de température peuvent être représentées sous la forme d'isothermes sur un écran.

16. Dispositif de mesure selon la revendication 14, **caractérisé en ce que** les valeurs de mesure de température peuvent être imprimées sous la forme d'isothermes par une imprimante.

17. Dispositif de mesure selon la revendication 14, **caractérisé en ce que** la ou chaque matrice de sondes de mesure de température (T1, T2, T3, ... Tn) est disposée à des distances identiques des surfaces, côté verre, des matériaux de construction des récipients.

18. Dispositif de mesure selon la revendication 14, **caractérisé en ce qu'**au moins deux matrices de sondes de mesure de température (T1, T2, T3, ... Tn) sont disposées à des distances différentes des surfaces, côté verre, des matériaux de construction des récipients.

19. Dispositif de mesure selon la revendication 14, **caractérisé en ce que** la au moins une matrice de sondes de mesure de température (T1, T2, T3, ... Tn) est disposée du côté d'au moins une surface limite faisant partie du groupe réchauffeurs, fonds de cuves, parois latérales, passages, parties d'épuration et de conditionnement, dispositifs d'alimentation et têtes d'alimentation.

20. Dispositif de mesure selon la revendication 14, **caractérisé en ce que** le calculateur (9) est conçu pour une détermination de valeurs supplémentaires de température à l'intérieur et à l'extérieur de la ou de chaque matrice par interpolation et/ou extrapolation et que la au moins une mémoire (11, 12) comporte des emplacements de mémoire pour ces valeurs supplémentaires de température et pour leurs coordonnées de surface fictives.
